# EUROPEAN PATENT SPECIFICATION

(11) **EP 0 692 616 B1**
(45) Date of publication and mention of the grant of the patent: **16.09.1998**
(21) Application number: 95111085.7
(22) Date of filing: 14.07.1995
(51) Int. Cl.: F01N 1/24, F01N 7/18, B29C 41/08

(54) **Preformed sound-absorbing material for engine exhaust muffler**
Vorgeformtes schalldämmendes Material für Auspuffschalldämpfer einer Brennkraftmaschine
Matériau absorbant acoustique préfabriqué pour silencieux d'échappement de moteur

(30) Priority: 15.07.1994 US 275560
(43) Date of publication of application: 17.01.1996
(73) Proprietor: OWENS-CORNING SWEDEN AKTIEBOLAG, 311 82 Falkenberg (SE)
(72) Inventor: Knutsson, Goran, 31141 Falkenberg (SE)
(74) Representative: Müller-Boré & Partner Patentanwälte

(56) References cited:
- EP-A- 0 446 064
- GB-A- 2 158 001

## Description

This invention relates to preforms of continuous glass fiber strands for use as the sound deadening material in an engine exhaust muffler.

Many mufflers include some sort of packing material or sound absorbing material located in the interior of the muffler for dampening the sound made by the escaping hot gases which pass through the muffler. While certain principles of sound attenuation have been recognized and utilized in various types of muffler designs, room for greatly improving muffler material remains. The advent of the clam-shell muffler design also provides an opportunity to improve the sound-deadening material.

Conventional materials for mufflers can be any porous, sound deadening material, including sized, crushed mineral matter, mica, exfoliated vermiculite, brown slag, coke, pumice, or other porous aggregate material. Fiberglass wool from insulation glass often was used as a noise dampening filler. Mineral wool and rock wool preformed or in the shape of loose wool also have been used. A disadvantage for using short fiber wool is that the fibers have a tendency to blow out through the perforations in the exhaust duct. The equipment for filling the mufflers requires a lot of space. Also, achieving even filling is difficult. Uneven filling with wool can result in the wool being packed against the muffler inner wall due to the effect of the exhaust gases, so that the noise muffling properties deteriorate even after a short period of time.

GB-A-2 158 001 describes a method of making a molding for inserting into an exhaust silencer casing comprising the steps of establishing a gas flow through a mold having a shape corresponding to that of the molding to be formed; chopping a strand of fibers into discrete lengths; allowing the chopped fibers to be carried into the mold in the gas flow; introducing a bonding agent into the mold to bond the fibers into a unitary body; and removing the molding thereby formed from the mold.

One method for improving the use of glass fibers in mufflers involves feeding lengths of continuous glass fiber strands into an apparatus that feeds the strands into the muffler and blows or expands the strands into a wool-like material inside the muffler. Air expands the strands at the same time they are fed into the muffler. See U.S. Patent No. 4,569,471. The continuous glass strands are made from E glass or other glass compositions used for the production of composite, not insulation glass compositions.

In the present invention preforms of glass fiber strands for use as the sound absorbing material in an engine exhaust muffler have been developed. Preferably, E glass compositions are used. However, other glass composition for the production of composites may be used. With this invention, the roving is fluffed up, not directly in the muffler, but in a cavity that is made of perforated shells having the shape of the muffler to be filled. During this operation, a powder binder also is blown together with the fibers into the screen. As a next step, hot air is blown through the perforated screen and melts the binder and allows it to bond the fibers together. In a third step, cold air is blown in turn through the screen to cool down the preform and set the binder so that the preform can be taken out of the screen ready for further usage.

While the filling of mufflers can be made using the patented method of U.S. Patent No. 4,569,471 the newer technique of the present invention involves the making of preforms which are placed in the muffler before the muffler is assembled. A newer type of mufflers, the so-called "clam-shell mufflers" are being developed progressively replacing previous elliptical or round shaped mufflers. They offer several advantages, in particular they offer a greater freedom from the standpoint of geometry allowing for better fit under the car bodies and better aerodynamics. Clam-shell mufflers, however, require specific tooling, machinery and capital expenses for continuous E glass filling that are generally too heavy to bear if the volume of mufflers produced is small.

This invention does not require expensive tooling allowing one machine to produce many different types of mufflers with very low specific tooling costs. Another advantage of this invention allows more intricate shapes of clam-shell mufflers to be filled with fluffed continuous glass fiber filaments. With the ease of producing my preforms, standardization of size and shape becomes less critical.

Figure 1 is a view of a preform according to this invention.

Figure 2 is a view of a perforated shell which resembles a clam-shell muffler.

Figure 3 is a view of a clam-shell muffler.

The present invention is compatible with any glass fiber conventionally utilized as reinforcements. The term "glass fibers" as used herein shall mean filaments formed by attenuation of one or more streams of molten glass or strands which are formed when such glass fiber filaments are gathered together in the forming process. The term shall also mean yarns and cords formed by applying and/or twisting a multiplicity of strands together. Preferably, the present invention uses E glass type fibers. Other reinforcement glass compositions may be used.

The glass fibers typically will be coated with a conventional size which allows the fibers to unwind and to expand or fluff when blown with air. Generally, the size may contain a carrier solvent, normally water, a coupling agent, a film-former material and the like.

Sizing compositions typically employed as coatings for glass fibers are conventionally applied to the surface of the glass fibers after the glass fiber has been formed. Typically, it is necessary to first produce the glass fibers and then provide a thin layer of a size composition to the surface of the bare glass fibers. The glass fibers are then collected into a strand and the strand is wound around a take-up bobbin to form a substantially cylindrical package, conventionally termed a "yarn package". The yarn package is then air dried after unwinding or subjected to elevated temperatures in order to dry the size composition applied to the surface of the glass fibers during or after winding.

The present invention uses any thermoplastic or thermoset resins which can be produced or reduced into a powder such as, for example, polyvinyl chloride, CPVC, polyethylene, polypropylene, nylon, poly(butylene terephthalate) PBT, or poly(ethylene terephthalate) PET, polyester, phenolics or solid epoxies. Also, high-performance materials such as liquid crystal polymers, polyetheretherketone (PEEK) or polyphenylene sulfide (PPS) can be used. Thermosetting binders such as powdered phenolic binders are preferred.

The thermoplastic or thermoset resins are dispersed in the form of fine particles. In a preferred embodiment, the size of the powder particles is between about 5 to 500 microns, or preferably between about 150 to 300 microns. According to the process of the present invention, the resin powders can be applied to the filaments in an amount ranging between about 3 to about 30 percent, by weight, of the final preform.

The hot air is at a temperature ranging from 100°C to 300°C. However, the temperature of the hot air can vary depending on what is needed to melt or cure the powdered binder. The cooling air is at ambient temperatures ranging from 0°C to 40°C. The cooling air can be chilled if necessary.

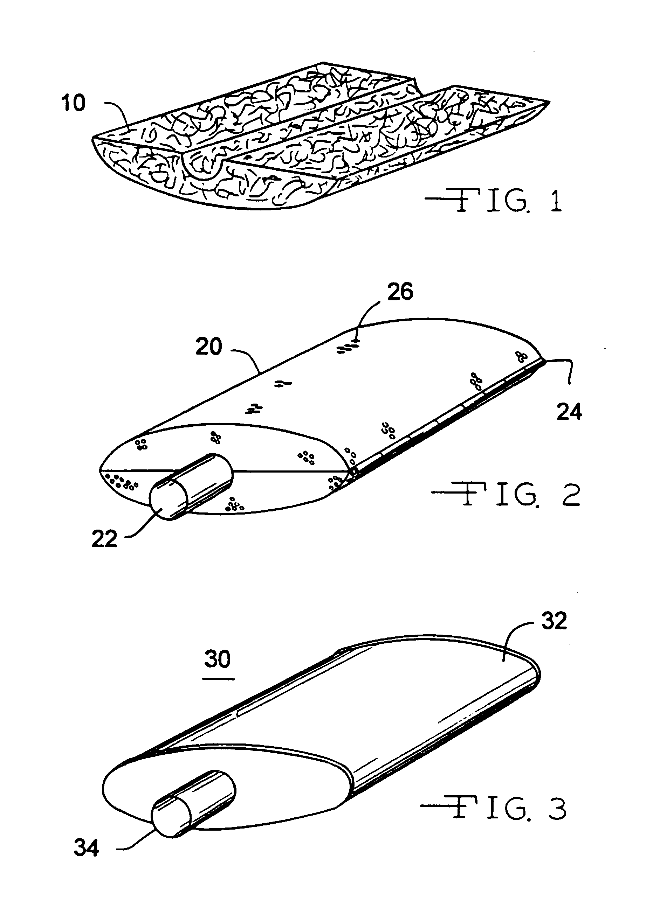

Figure 1 shows preform 10 which is a half section of the final product produced by the process of this invention.

Figure 2 shows perforated clam shell 20 and nozzle 22. The process of this invention feeds the continuous glass fiber strands into clam shell 20 through nozzle 22. The process also feeds the powdered binder and hot air into perforated screen 20 through nozzle 22. The nozzle may be any cylindrical housing which defines a chamber with a bore for coupling compressed air lines, the glass fiber strands and the powdered binder enter nozzle 22 for inserting into perforated screen 20. The air blown through nozzle 22 will impart a forward movement of the strands and binder and blow apart and entangle the strands to form a wool-type product with substantially continuous fibers. The wool is blown directly into perforated screen 20 and blown in air is evacuated through perforations 26. The degree of expansion of the wool is determined by factors such as rate of speed, air speed and the amount of air through nozzle 22. The degree of packing in perforated screen 20 is determined by the pressure in perforated screen 20 and can be varied by varying the input of the glass fiber strains and the hot air. The amount of glass fibers fed into perforated screen 20 is checked by measuring the length of strands fed into perforated screen 20. This can be done with the aid of a counter or other automated means. After filling perforated screen 20 with the desired amount of strands, feeding of strands is terminated.

When perforated screen 20 is filled, hot air is circulated to melt or cure the binder; then cool air is circulated through perforated screen 20 to set or cool the powdered binder. Typically, the cool air is nothing more than air at room temperatures. Perforated screen 20 has hinges 24 and has fastners (not shown) so that preform 10 can be removed. The final product preform 10 then is removed from perforated screen 20 where it can be inserted into a clam shell muffler at a separate stage in the process.

Figure 3 shows clam-shell muffler 30 which houses preform 10. Muffler 30 comprises shell 32 and inlet end 34. Muffler 30 also has an outlet (not shown). Naturally, preform 10 is inserted into muffler 30 before final assembly is completed. Typically, muffler 30 is two shells halves which are fastened or welded together after preform 10 is inserted.

## Claims

1. A process for forming a preform of continuous, glass fiber strands comprising the steps of:
inserting continuous, glass fiber strands into a perforated shell having the shape of a desired preform;
feeding the continuous strands through an apparatus that blows or expands the strands into a wool-like material;
inserting a powder binder into the perforated shell together with the strands;
circulating hot air into the perforated shell to soften or cure the binder;
wherein the softened or cured binder bonds the wool-like strands together; and
cooling the bonded, wool-like strands to form and set the preform.

2. A process according to claim 1 wherein the steps of inserting strands, blowing them into a wool-like material and inserting the binder are carried out simultaneously.

3. A process according to claim 1 or 2 wherein feeding the glass fiber strands through a ventury system causes the strands to separate and become entangled in the form of a wool-type product.

4. A process according to any preceding claim wherein the continuous, glass fiber strands are made of E glass compositions.

5. A process according to anyone of claims 1 to 3 wherein the continuous, glass fiber strands are made of glass compositions used in the production of composites.

6. A process according to any preceding claim wherein the powder binder is a thermosetting material, a thermoplastic material or a mixture of a thermosetting material and a thermoplastic material.

7. A process according to any preceding claim wherein the hot air is at a temperature ranging from 100°C to 300°C.

8. A process according to any preceding claim wherein the cooling is carried out by circulating air at ambient temperatures through the perforated shell, allowing the softened binder to bond the strands together or to cool the preform.

9. A process according to any preceding claim wherein the powdered binder has a particle size ranging from 5 to 500 microns.

10. A preform of continuous, glass fiber strands for use as sound-absorbing material in an engine exhaust muffler wherein the strands are fluffed up into a wool-type material and bonded together with a thermoplastic or thermosetting powdered binder.

11. An engine exhaust muffler comprising a shell having an inlet end and an outlet end wherein the shell houses the preform of claim 10.

## Patentansprüche

1. Verfahren zum Bilden einer Vorform von kontinuierlichen Glasfasersträngen, umfassend die Schritte:
Einbringen von kontinuierlichen Glasfasersträngen in eine perforierte Umhüllung mit der Gestalt einer gewünschten Vorform;
Beschicken der kontinuierlichen Stränge durch eine Vorrichtung, welche die Stränge zu einem wollähnlichen Material aufbläst oder expandiert;
Einbringen eines Pulverbindemittels in die perforierte Umhüllung zusammen mit den Strängen;
Zirkulieren von heißer Luft in die perforierte Umhüllung, um das Bindemittel zu erweichen oder zu härten, wobei das erweichte oder gehärtete Bindemittel die wollähnlichen Stränge zusammenbindet; und
Abkühlen der verbundenen, wollähnlichen Stränge zum Bilden und Härten der Vorform.

2. Verfahren nach Anspruch 1, wobei die Schritte des Einbringens der Stränge, des Aufblasens zu einem wollähnlichen Material und des Einbringens des Bindemittels gleichzeitig ausgeführt werden.

3. Verfahren nach Anspruch 1 oder 2, wobei das Beschicken der Glasfaserstränge durch ein Luftzufuhrsystem bewirkt, daß die Stränge getrennt werden und in die Form eines Produkts vom Wolltyp verwickelt werden.

4. Verfahren nach einem vorhergehenden Anspruch, wobei die kontinuierlichen Glasfaserstränge aus E-Glas-Zusammensetzungen hergestellt sind.

5. Verfahren nach einem der Ansprüche 1 bis 3, wobei die kontinuierlichen Glasfaserstränge aus Glaszusammensetzungen hergestellt sind, welche in der Herstellung von Verbundwerl<stoffen verwendet werden.

6. Verfahren nach einem vorhergehenden Anspruch, wobei das Pulverbindemittel ein wärmehärtendes Material, ein thermoplastisches Material oder ein Gemisch eines wärmehärtenden Materials und eines thermoplastischen Materials ist.

7. Verfahren nach einem vorhergehenden Anspruch, wobei die heiße Luft bei einer Temperatur im Bereich von 100°C bis 300°C ist.

8. Verfahren nach einem vorhergehenden Anspruch, wobei das Abkühlen durch Zirkulieren von Luft bei Umgebungstemperaturen durch die perforierte Hülle durchgeführt wird, wobei zugelassen wird, daß das erweichte Bindemittel die Stränge zusammenbindet oder die Vorform abkühlt.

9. Verfahren nach einem vorhergehenden Anspruch, wobei das gepulverte Bindemittel eine Teilchengröße im Bereich von 5 bis 500 µm aufweist.

10. Vorform aus kontinuierlichen Glasfasersträngen zur Verwendung als schalldämpfendes Material in einem Auspuffschalldämpfer eines Motors, wobei die Stränge zu einem Material vom Wolltyp aufgeplustert und mit einem thermoplastischen oder wärmehärtenden gepulverten Bindemittel zusammengebunden werden.

11. Auspuffschalldämpfer eines Motors, umfassend eine Umhüllung mit einem Einlaßende und einem Auslaßende, wobei die Umhüllung die Vorform von Anspruch 10 eingelagert enthält.

## Revendications

1. Procédé pour réaliser une préforme de torons de fibres de verre continus comprenant les opérations consistant à :
insérer des torons de fibres de verre continus dans une coque perforée ayant la forme d'une préforme souhaitée ;
distribuer les torons continus via un appareil qui gonfle ou dilate les torons en un matériau de type laine ;
insérer un liant en poudre dans la coque perforée en même temps que les torons ;
faire circuler de l'air chaud dans la coque perforée pour ramollir ou cuire le liant ;
dans lequel le liant ramolli ou cuit lie les torons de type laine les uns aux autres ; et
refroidir les torons liés de type laine pour former et durcir la préforme.

2. Procédé selon la revendication 1, dans lequel les phases d'insertion des torons, de gonflage des torons en un matériau de type laine et d'insertion du liant sont exécutées simultanément.

3. Procédé selon la revendication 1 ou 2, dans lequel la distribution des torons de fibres de verre via un venturi amène les torons à se séparer et à s'enchevêtrer sous la forme d'un produit de type laine.

4. Procédé selon l'une quelconque des revendications précédentes, dans lequel les torons de fibres de verre continus sont constitués de compositions de verre E.

5. Procédé selon l'une quelconque des revendications 1 à 3, dans lequel les torons de fibres de verre continus sont constitués de compositions de verre utilisées dans la fabrication de composites.

6. Procédé selon l'une quelconque des revendications précédentes, dans lequel le liant en poudre est un matériau thermodurcissable, un matériau thermoplastique ou un mélange d'un matériau thermodurcissable et d'un matériau thermoplastique.

7. Procédé selon l'une quelconque des revendications précédentes, dans lequel l'air chaud est à une température dans la plage de 100°C à 300°C.

8. Procédé selon l'une quelconque des revendications précédentes, dans lequel le refroidissement est effectué en faisant circuler de l'air à température ambiante dans la coque perforée, ce qui permet au liant ramolli de lier les torons les uns aux autres ou de refroidir la préforme.

9. Procédé selon l'une quelconque des revendications précédentes, dans lequel le liant en poudre a une grosseur de particules dans la plage de 5 à 500 micromètres.

10. Préforme de torons de fibres de verre continus destinée à être utilisée comme matériau absorbant le bruit dans un silencieux d'échappement de moteur, dans laquelle les torons sont expansés en un matériau de type laine et liés les uns aux autres avec un liant en poudre thermoplastique ou thermodurcissable.

11. Silencieux d'échappement de moteur comprenant une coque comportant une extrémité d'entrée et une extrémité de sortie, dans lequel la coque loge la préforme de la revendication 10.
